# EUROPÄISCHE PATENTSCHRIFT

(11) **EP 1 818 653 B1**
(45) Veröffentlichungstag und Bekanntmachung des Hinweises auf die Patenterteilung: **09.11.2016**
(21) Anmeldenummer: 07000961.8
(22) Anmeldetag: 18.01.2007
(51) Int. Cl.: G01D 5/48, F41G 3/22

(54) **Magnetostriktiver Positionssensor**
Magnetostrictive position sensor
Capteur de position magnétostrictif

(30) Priorität: 09.02.2006 DE 102006005896
(43) Veröffentlichungstag der Anmeldung: 15.08.2007
(73) Patentinhaber: Krauss-Maffei Wegmann GmbH & Co. KG, 80997 München (DE)
(72) Erfinder: Becker, Wolf-Jürgen Prof. Dr., 34146 Vellmar (DE); Jendraschak, Jürgen Dipl.-Ing., 34346 Hann. Münden (DE); Michl, Bastian Ing., 34466 Wolfhagen (DE); Ricken, Werner Dr.-Ing., 34369 Hofgeismar (DE)
(74) Vertreter: Feder Walter Ebert

(56) Entgegenhaltungen:
- EP-A- 0 455 838
- EP-A1- 0 019 707
- US-A- 5 747 986

## Beschreibung

Die Erfindung betrifft einen magnetostriktiven Positionssensor mit den Merkmalen aus dem Oberbegriff des Patentanspruchs 1, die Verwendung dieses Sensors gemäß Patentanspruch 12 sowie ein Verfahren zur Positionsbestimmung mit den Merkmalen aus dem Oberbegriff des Patentanspruchs 16.

Die Erfindung beruht auf dem magnetostriktiven Effekt. Magnetostriktive Sensoren sind seit langem bekannt. Die DE 20 2004 002 891 U1 beschreibt beispielsweise einen magnetostriktiven Streckensensor, welcher einen draht- oder rohrförmigen in Messrichtung verlaufenden Wellenleiter aus einem magnetostriktiven Material aufweist. Durch einen kontaktlos nah an den Wellenleiter herangebrachten Positionsmagneten wird mittels Überlagerung von Magnetfeldern eine mechanisch-elastische Welle ausgelöst, beispielsweise auf Grund des Wiedemanneffekts, die sich in beiden Richtungen entlang des Wellenleiters ausbreitet und an dessen Enden detektiert werden kann. Auf Grund der gemessenen Laufzeit der mechanisch-elastischen Welle kann die exakte Entfernung des Positionsmagneten von dem Ende des Wellenleiters bestimmt werden und damit die Position einer beweglichen Baugruppe, an welcher der Positionsmagnet befestigt ist. Der Wellenleiter wird in einem Stützkörper, z.B. einem Rohr aufgenommen, um eine mechanisch stabile Halterung zu erreichen und eine Anordnung an einem entsprechenden Bauteil zu ermöglichen. Die elektronischen Bauteile sind an einem Ende des Wellenleiters angeordnet, so beispielsweise eine Detektorspule, ein Villary-Bändchen oder ein piezoelektrischer Aufnehmer, eine Signalaufbereitung und eine Diagnoseausgabe. Diese Elemente sind in einem Gehäuse untergebracht und damit gegen Umgebungseinflüsse geschützt.

Nachteilig an dieser Ausgestaltung ist, dass der Positionsmagnet bewegt werden muss. Der bekannte Sensor besteht im Wesentlichen aus zwei Elementen, dem magnetostriktiven Element und dem magnetischen Element, welche relativ zueinander bewegt werden. Eine solche Ausgestaltung ist ungeeignet für einen ortsfesten Tastsensor, welcher eine Position, die durch äußeren Druck auf den Sensor vorgegebenen wird, detektieren soll.

Magnetostriktive Wegsensoren mit einzelnen beweglichen Positionsmagneten werden ferner beschrieben in der DE 102 01 880 A1, der DE 197 0081 A1 und der US 3,898,555.

Die Erfindung kann Einsatz finden bei einer Schnelleinweisungsvorrichtung in einem Fahrzeug, insbesondere in einem Kampffahrzeug. Schnelleinweisungsvorrichtungen sind an sich bekannt. Eine Schnelleinweisungsvorrichtung wird beispielsweise verwendet, wenn bei einem Kampffahrzeug oder Beobachtungsfahrzeug die Umgebung aus dem Innern des Fahrzeugs visuell beobachtet wird.

Die Beobachtung kann entweder direkt oder aus einer offenen Luke oder über fest eingebaute Winkelspiegel erfolgen. Sobald der Beobachter ein mögliches Ziel entdeckt, so muss dieses zur genaueren Beurteilung durch ein drehbar montiertes Periskop erfasst werden, dessen Gesichtsfeld stark eingeschränkt ist. Es ist notwendig, das Periskop (und gegebenenfalls ein Geschützrohr) möglichst rasch in die Richtung des Ziels einzuweisen, d.h. der Beobachter muss die Richtung, welche er visuell erfasst hat, auf das Periskop übertragen, damit er bei anschließender Sicht durch dieses sich rasch in der Umgebung zurechtfindet. Die EP 0 455 838 B1 beschreibt eine solche Schnelleinweisungsvorrichtung für eine servogetriebene Richtvorrichtung an einem Beobachtungs- oder Geschützfahrzeug, mit einem als Winkelgeber dienenden, ringförmig um den Beobachtungsplatz herum am Fahrzeug angebrachten Tastpotentiometer, wobei das Tastpotentiometer eine flexible Widerstandsbahn und eine flexible Kontaktbahn enthält, die in einer schlauchähnlichen Isolierhülle in radialem Abstand voneinander längsverschieblich geführt sind, wodurch das Tastpotentiometer verschiedenen Biegeradien anpassbar ist, und wobei es an einem Auskleidungsprofil des Beobachterplatzes angebracht und von diesem in seiner Ringform bestimmt ist. Das beschriebene Fahrzeug weist ferner eine Beobachtungsluke auf, wobei das Tastpotentiometer in das Auskleidungsprofil des Lukenrandes der Beobachtungsluke integriert ist.

Nachteilig an dieser Ausgestaltung ist allerdings, dass eine regelmäßige Kalibrierung, Justage und Widerstandsüberprüfung notwendig ist, bedingt u.a. durch eine Temperaturabhängigkeit des Widerstandsmaterials. Ferner erfolgt die Messung nicht kontaktlos, so dass auf Grund von Verschleißerscheinungen die Lebensdauer begrenzt ist.

Die US 5,747,986 zeigt einen magnetostriktiven Sensor, welcher auf einer magnetostriktiven "delay line" basiert. Rechtwinklig zu diesem magnetostriktiven Element sind mehrere Leitungsbahnen angeordnet, durch die Stromimpulse geleitet werden. Durch die Impulse wird ein Körperschall-Signal am magnetostriktiven Element erzeugt, deren Amplitude auswertbar ist. Durch Anordnen von Magneten in einem Abstand zu den Leitungsbahnen oder dem magnetostriktiven Element kann die Amplitude des Körperschall-Signals verändert werden, wobei die Änderung in Abhängigkeit von dem Ort des magnetischen Elementes steht, so dass durch die Amplitudenänderung eine Ortsbestimmung des Magneten möglich ist. Die Anordnung kann als "tactile array" eingesetzt werden, wobei hierzu eine schaumartige Matte zwischen den Magneten und den leitungsführenden Bahnen bzw. dem magnetostriktiven Element angeordnet werden kann. Die Stromimpulse werden nicht durch das magnetostriktive Element sondern durch separate Leitungsbahnen geführt.

Nachteilig an einer solchen Ausgestaltung ist, dass zur Positionsbestimmung somit eine Vielzahl von parallel angeordneten Leiterbahnen notwendig sind, so dass ein aufwändiger Aufbau vorliegt. Ferner erfolgt die Positionsbestimmung nicht über eine Laufzeitmessung, sondern über eine Amplitudenmessung. Die Messung einer Veränderung einer absoluten Amplitude ist mit einer sehr hohen Ungenauigkeit behaftet, die beispielsweise durch Rauschen oder Temperaturabhängigkeiten entsteht.

In der EP 0 019 707 A1 wird ein wird ein magnetostriktiver Postitionssensor für eine Tastatur mit einem magnetischen Element, einem magnetostriktiven Element, einem Detektor und einem Impulsgenerator beschrieben. Das magnetische Element ist beweglich in einem vorgegebenen Abstand zu dem magnetostriktiven Draht unterhalb einer Taste der Tastatur angeordnet. Der bewegliche Magnet und/oder der magnetostriktive Draht sind dabei derart flexibel ausgeführt, dass bei Druck auf die Taste der Abstand zwischen den Elementen an dieser Stelle verringert wird. Mittels einer Rückstellvorrichtung kann der vorgegebene Abstand zwischen den Elementen wiederherstellt werden, nachdem ein Druck auf eines der Elemente ausgeübt worden ist. Der Sensor umfasst des Weiteren einen Impulsgenerator zur Generierung von durch das magnetostriktive Element geleiteten Stromimpulsen und einen als Abtastspule ausgebildeten Detektor zum Empfang eines Signals und zu dessen Laufzeitmessung.

Aufgabe der Erfindung ist, einen ortsfesten Sensor derart auszugestalten, dass bei hoher Genauigkeit und geringer Temperaturabhängigkeit eine durch von außen auf das Sensorelement ausgeübten mechanischen Druck vorgegebene Position ermittelt werden kann. Der erfindungsgemäße Positionssensor sollte insbesondere in der Lage sein, als Schnelleinweisungsvorrichtung verwendet werden zu können.

Die Erfindung löst die Aufgabe vorrichtungsmäßig mit den Merkmalen aus dem kennzeichnenden Teil des Patentanspruchs 1 sowie verfahrensmäßig mit den Merkmalen aus dem kennzeichnenden Teil des Patentanspruchs 16. Vorteilhafte Weiterbildungen sind in den abhängigen Ansprüchen beschrieben.

Der Positionssensor, welcher ein magnetisches Element, ein magnetostriktives Element, einen Detektor und einen Impulsgenerator aufweist, wobei das magnetische Element zu dem magnetostriktiven Element einen vorgegebenen Abstand aufweist, ist dadurch gekennzeichnet, dass das magnetische Element und/oder das magnetostriktive Element derart flexibel ausgeführt sind, dass bei mechanischem Druck auf eine Stelle an einem der Elemente der Abstand zwischen den Elementen an dieser Stelle verringert wird, und dass der Sensor eine Rückstellvorrichtung umfasst, welche, nachdem ein Druck auf eines der Elemente ausgeübt worden ist, den vorgegebenen Abstand zwischen den Elementen wiederherstellt. Der vorgegebene Abstand ist derart dimensioniert, dass in diesem unbetätigten Zustand kein magnetostriktiver Effekt eintritt, d.h. der Abstand der beiden Elemente liegt über einem vorgegebenen Schwellwert. Der Impulsgenerator generiert in vorgegebenen Zeitintervallen Stromimpulse, welche durch den magnetostriktiven Draht geleitet werden. Sobald der Abstand zwischen dem magnetischen Element und dem magnetostriktiven Element verringert wird, kann der magnetostriktive Effekt in Folge Überschreitung einer magnetischen Mindest-Flussdichte eintreten. Der Abstand der beiden Elemente liegt nunmehr unter dem vorgegebenen Schwellwert. Es wird folglich als Signal eine mechanisch-elastische Welle ausgelöst, welche von dem Detektor empfangen wird. Über die Laufzeit des Signals wird die Position des Druckpunkts ermittelt. Vorteilhafterweise verläuft das magnetische Element zu dem magnetostriktiven Element parallel.

In einer bevorzugten Ausführung weist das magnetische Element einzelne, aneinandergereihte Permanentmagnete auf. Es kann ferner bandförmig ausgeführt sein. Das Band kann mit hinreichend schmalen Permanentmagneten in entsprechend großer Anzahl besetzt sein, wobei die Permanentmagnete in Kunststoff eingebettet sein können. Als magnetostriktives Element wird bevorzugt ein magnetostriktiver Draht verwendet.

Um die notwendige Rückstellkraft zu erreichen, kann zwischen dem magnetischen und dem magnetostriktiven Element eine Schicht aus einem elastischen Material angeordnet sein. Insbesondere kann sich zwischen den Elementen eine Schicht aus einem schaumartigen Kunststoff befinden.

Erfindungsgemäß wird, um die notwendige Rückstellkraft zu erreichen, vorgeschlagen, dass das magnetische und das magnetostriktive Element an zwei gegenüberliegenden Seiten eines flexiblen, verformbaren Hohlelementes angeordnet ist, welches mit einem Gas und/oder einer Flüssigkeit gefüllt ist.

Vorteilhafterweise weist der Sensor eine Abschirmung auf, welche das magnetostriktive und das magnetische Element umschließt, und welche eine magnetische Abschirmung leistet. Die Abschirmung kann beispielsweise aus einem ferro-magnetischen Material bestehen. Die Abschirmung kann ferner ein U-förmiges Profil aufweisen. Durch die Abschirmung ergeben sich nicht nur gute EMV-Eigenschaften, sondern auch eine Robustheit gegenüber Umwelteinflüssen wie Feuchtigkeit und Staubverschmutzung. Ferner kann die Abschirmung als Befestigungselement dienen.

Auf Grund der verwendeten flexiblen Elemente ist es möglich, den gesamten Sensor zu biegen. In einer vorteilhaften Ausgestaltung ist der Sensor kreisförmig ausgestaltet. Je nach Art der verwendeten Elemente sind Biegeraden von weniger als 12 cm realisierbar.

Der Sensor kann als Schnelleinweisungsvorrichtung in einem Fahrzeug, insbesondere in einem Kampffahrzeug oder Beobachtungsfahrzeug, eingesetzt werden. Er kann hierbei um einen Beobachtungsplatz herum im Innern des Fahrzeugs oder entlang dem Umfang einer Beobachtungsluke des Fahrzeugs angeordnet sein. Bevorzugt wird der Sensor als Azimutwinkelgeber eingesetzt. Insbesondere wird der Sensor lageunabhängig im Raum eingesetzt, so dass die Einbaulage des Sensors für seine Funktion keine Rolle spielt.
Die Temperaturabhängigkeit des Sensors ist hinsichtlich der Positionsbestimmung der Taststelle zu vernachlässigen, somit entfällt eine Überprüfung und Justage. Das magnetische Element und das magnetostriktive Element treten während der Messung nicht in Kontakt, wodurch die Lebensdauer des Sensors erhöht wird. Der Sensor zeichnet sich außerdem durch eine hohe Genauigkeit und Auflösung aus.

Der Sensor kann über eine Schnittstelle in einfacher Weise direkt an gängige Feldbussysteme angeschlossen werden. Es können ferner Fehlerdiagnosesysteme verwendet werden, welche automatisiert den Zustand des Sensors überprüfen.

Mögliche Ausführungsbeispiele der Erfindung sind in den Figuren 1 bis 9 dargestellt.

Es zeigen:
- Fig. 1: eine erste Ausführung eines Sensor im Längsschnitt im unbetätigten Zustand
- Fig. 2: den Sensor aus Fig. 1 im Querschnitt
- Fig. 3: den Sensor aus Fig. 1 im Längsschnitt im betätigen Zustand
- Fig. 4: den Sensor aus Fig. 3 im Querschnitt
- Fig. 5: eine Prinzipskizze eines magnetischen Elements
- Fig. 6: eine Prinzipskizze eines an einem Lukenrand angeordneten Sensors
- Fig. 7: ein Blockschaltbild des Sensors
- Fig. 8: eine zweite Ausführung eines Sensors im Querschnitt
- Fig. 9: das magnetische und das magnetostriktive Element des Sensors aus Fig. 8 in der Draufsicht

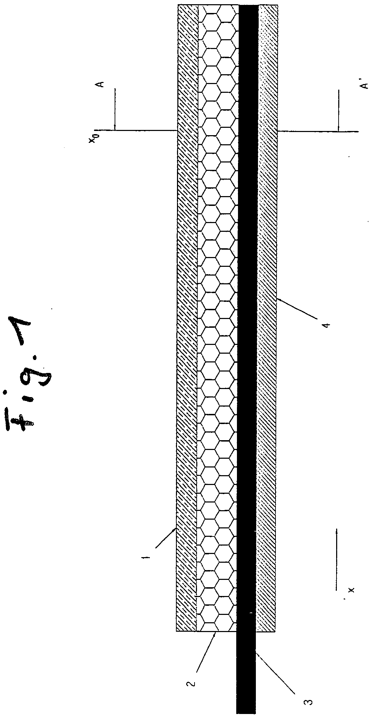

Die Fig. 1 zeigt eine erste Ausführung eines Positionsensors im Längsschnitt im unbetätigten Zustand. Der Sensor weist als magnetisches Element ein flexibles Magnetband 1 und als magnetostriktives Element einen magnetostriktiven Draht 3 auf, der in einer nicht dargestellten Schutzhülle eingebettet ist. Der Draht 3 und das Magnetband 1 verlaufen parallel zueinander.

Zwischen dem Draht 3 und dem Magnetband 1 ist ein schaumartiger Kunststoff als elastisches Material 2 angeordnet, welches die nötige Rückstellkraft beinhaltet. Der Sensor weist ferner eine Abschirmung 4 aus einem ferro-magnetischen Material auf.

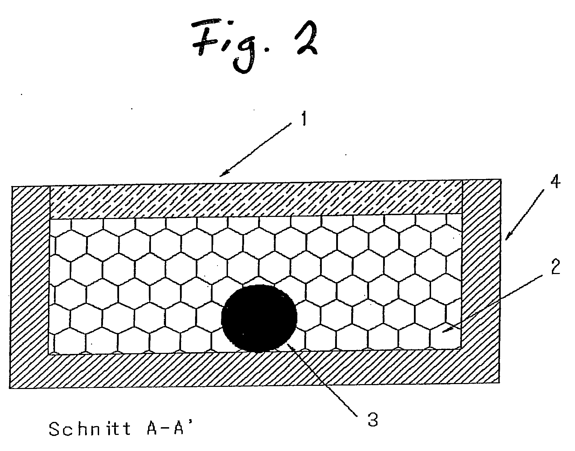

Die Fig. 2 zeigt den Sensor aus Fig. 1 mit dem Magnetband 1, dem magnetostriktiven Draht 3, dem elastischen Material 2 und der Abschirmung 4 im Querschnitt gemäß der Schnittlinie AA' in Fig. 1. Die Abschirmung 4 weist ein U-förmiges Profil auf.

Der Abstand zwischen dem Draht 3 und dem Magnetband 4 ist derart dimensioniert, dass in diesem unbetätigten Zustand kein magnetostriktiver Effekt eintritt, d.h. der Abstand der beiden Elemente liegt über einem vorgegebenen Schwellwert.

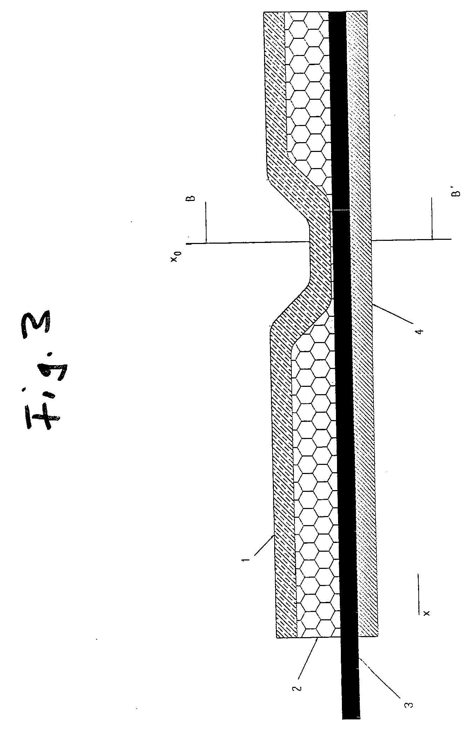

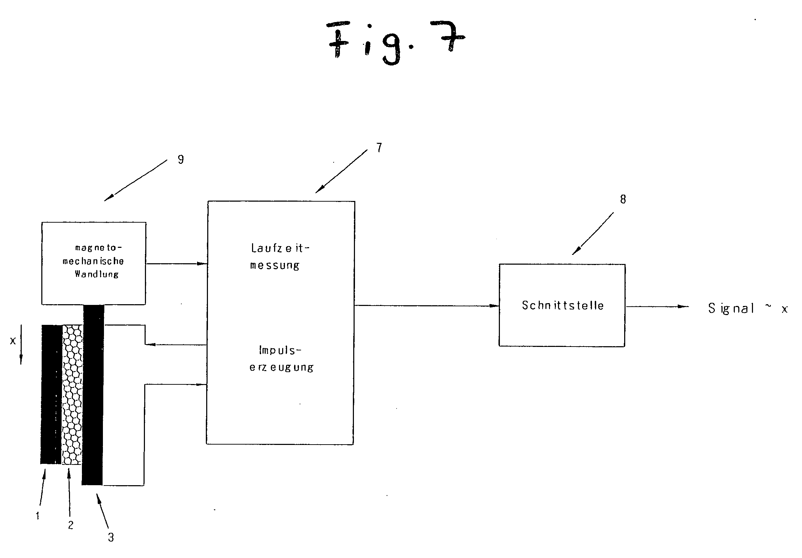

Die Fig. 3 zeigt den Sensor aus Fig. 1 im Längsschnitt im betätigten Zustand. Der Sensor kann beispielsweise in nicht dargestellter Weise durch einen Finger betätigt werden. An der Stelle x₀, an der ein Druck auf den Sensor ausgeübt wird, verformt sich das Magnetband 1 und das elastische Material 2, so dass der Abstand zwischen dem magnetostriktiven Draht 3 und dem Magnetband 1 verringert ist und unter dem vorgegebenen Schwellwert liegt. Durch den Draht geleitete, von einer in der Fig. 7 dargestellten Einheit 7 erzeugte Stromimpulse generieren ein zirkulares Magnetfeld, welches sich in Messrichtung ausbreitet. Wird dieses Magnetfeld von dem dazu senkrechten Magnetfeld des angenäherten Magnetbandes 1 durchsetzt, setzt der magnetostriktive Effekt ein und es wird ein Ultraschall-Signal generiert, durch welches die Position x₀ der Druckstelle ermittelt werden kann.

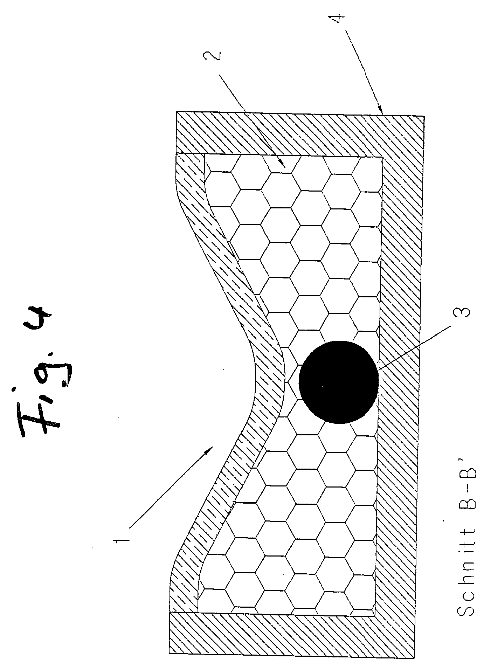

Die Fig. 4 zeigt den Sensor aus Fig. 3 im Querschnitt gemäß der Schnittlinie BB' in Fig. 3. Es wird deutlich, dass sich der magnetostriktive Draht 3 und das Magnetband 1 nicht berühren, d.h. die Messung erfolgt in diesem Sinn kontaktlos.

Nach der Betätigung, wenn kein mechanischer Druck mehr auf den Sensor ausgeübt wird, bewegt sich das Magnetband durch die Rückstellkraft des elastischen Materials wieder in seine in den Fig. 1 und 2 gezeigte Ausgangslage, so dass sein Abstand zum magnetostriktiven Draht 3 wieder über dem Schwellwert liegt.

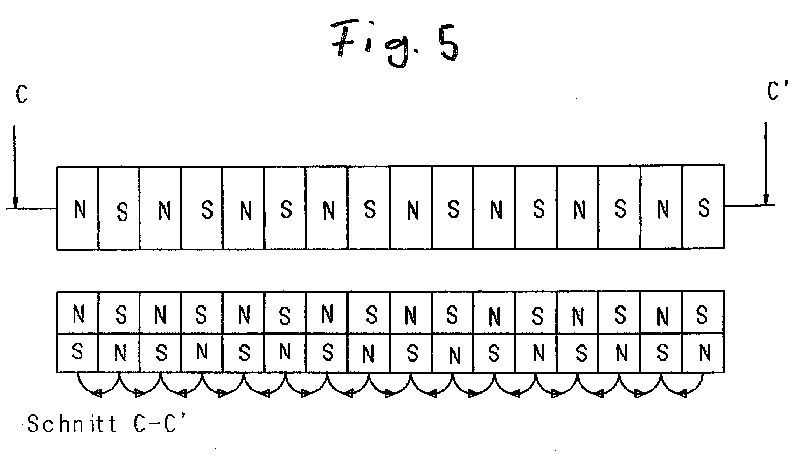

Die Fig. 5 zeigt den Aufbau des flexiblen Magnetbands 1 in einer Draufsicht und in einem Längsschnitt gemäß der Schnittlinie CC'. Das Magnetband 1 weist aneinandergereihte Permanentmagnete auf, welche in einem Kunststoff eingebettet sind.

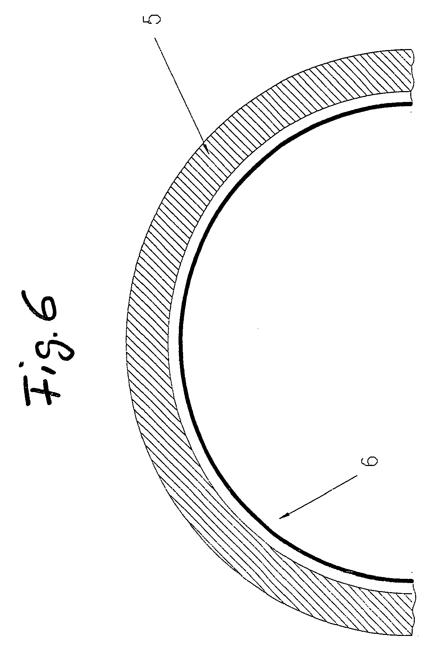

Die Fig. 6 zeigt ausschnittsweise eine Prinzipskizze eines Tastsensors 6. Der Tastsensor 6 ist an einem Rand einer Beobachtungsluke 5 eines nicht dargestellten Fahrzeugs angeordnet und wird als Schnelleinweisungsvorrichtung verwendet.

Die Fig. 7 zeigt ein Blockschaltbild des Sensors. Neben dem Magnetband 1 und dem Draht 3 ist eine Einheit 7 dargestellt, welche die Impulserzeugung und die Laufzeitmessung leistet. Der magnetomechanische Wandler 9 dient als Detektor zum Empfang der mechanisch-elastischen Welle in dem Wellenleiter. Die ermittelten Positions-Werte werden über die Schnittstelle 8 zur Verfügung gestellt.

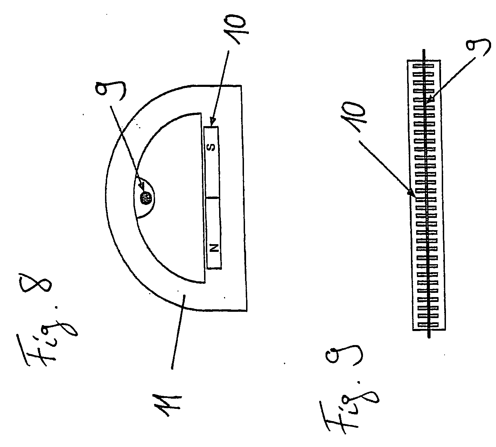

Die Fig. 8 zeigt eine zweite Ausführung eines Sensors im Querschnitt, welcher als magnetisches Element ein flexibles Magnetband 10, auf welchem Permanentmagnete angeordnet sind, und als magnetostriktives Element einen magnetostriktiven Draht 9 aufweist. Die beiden Elemente sind eingebettet an zwei gegenüberliegenden Seiten eines Hohlelementes 11, welches aus einem elastischen Material besteht und eine magnetische Abschirmung leitstet. Das Hohlelement 11 ist gasgefüllt und bewirkt die benötigte Rückstellkraft.

Die Anordnung der Permanentmagnete auf dem Magnetband 10 ist schematisch zusammen mit dem darüber liegenden Draht 9 in Fig. 9 dargestellt.

## Patentansprüche

1. Magnetostriktiver Postitionssensor, welcher ein magnetisches Element (1, 10) und ein magnetostriktives Element (3, 9) aufweist, wobei das magnetische Element (1, 10) zu dem magnetostriktiven Element (3, 9) einen vorgegebenen Abstand aufweist, wobei das magnetische Element (1, 10) und/oder das magnetostriktive Element (3, 9) derart flexibel ausgeführt sind, dass bei Druck auf eine Stelle an einem der Elemente der Abstand zwischen den Elementen an dieser Stelle verringert wird, und wobei der Sensor eine Rückstellvorrichtung (2) umfasst, welche, nachdem ein Druck auf eines der Elemente ausgeübt worden ist, den vorgegebenen Abstand zwischen den Elementen wiederherstellt,
mit einem Impulsgenerator (7) zur Generierung von durch das magnetostriktive Element (3, 9) geleiteten Stromimpulsen und einem Detektor (7) zum Empfang eines Signals und zu dessen Laufzeitmessung,
**dadurch gekennzeichnet,**
**dass** das magnetostriktive Element (3, 9) und das magnetische Element (1, 10) an zwei gegenüberliegenden Seiten eines flexiblen Hohlelementes (11) angeordnet sind, welches mit einem Gas und/oder einer Flüssigkeit gefüllt ist.

2. Sensor nach Anspruch 1, **dadurch gekennzeichnet, dass** das magnetische Element (1, 10) im Wesentlichen parallel zu dem magnetostriktiven Element (3, 9) verläuft.

3. Sensor nach Anspruch 1 oder 2, **dadurch gekennzeichnet, dass** das magnetische Element (1, 10) einzelne, aneinandergereihte Permanentmagnete aufweist.

4. Sensor nach einem der vorhergehenden Ansprüche, **dadurch gekennzeichnet, dass** das magnetische Element (1, 10) bandförmig ausgeführt ist.

5. Sensor nach einem der vorhergehenden Ansprüchen, **dadurch gekennzeichnet, dass** das magnetostriktive Element (3, 9) einen magnetostriktiven Draht umfasst.

6. Sensor nach einem der vorhergehenden Ansprüche, **dadurch gekennzeichnet, dass** sich zwischen dem magnetostriktiven Element (3, 9) und dem magnetischen Element (1, 10) eine Schicht aus einem elastischen Material (2) befindet.

7. Sensor nach einem der vorhergehenden Ansprüche, **dadurch gekennzeichnet, dass** sich zwischen den Elementen eine Schicht aus einem schaumartigen Kunststoff (2) befindet.

8. Sensor nach einem der vorhergehenden Ansprüche, **dadurch gekennzeichnet, dass** er eine Abschirmung (4) aufweist, welche das magnetostriktive Element (3, 9) und das magnetische Element (1, 10) umschließt, und welche eine magnetische Abschirmung leistet.

9. Sensor nach Anspruch 8, **dadurch gekennzeichnet, dass** die Abschirmung (4) ein U-förmiges Profil aufweist.

10. Sensor nach einem der vorhergehenden Ansprüche, dass er kreisförmig ausgeführt ist.

11. Fahrzeug, insbesondere Kampffahrzeug oder Beobachtungsfahrzeug, mit einem Positionssensors nach einem der vorhergehenden Ansprüchen als Schnelleinweisungs-vorrichtung.

12. Fahrzeug nach Anspruch 11, **dadurch gekennzeichnet, dass** der Sensor um einen Beobachtungsplatz herum im Innern des Fahrzeugs angeordnet ist.

13. Fahrzeug nach Anspruch 12, **dadurch gekennzeichnet, dass** der Sensor entlang dem Umfang einer Beobachtungsluke (5) des Fahrzeugs angeordnet ist.

14. Fahrzeug nach einem der Ansprüche 11 bis 13, **dadurch gekennzeichnet, dass** der Sensor als Winkelgeber, insbesondere lageunabhängig im Raum, eingesetzt wird.

15. Fahrzeug nach einem der Ansprüche 11 bis 13, **dadurch gekennzeichnet, dass** der Sensor als Weggeber eingesetzt wird.

16. Verfahren zur Positionsermittlung, wobei ein magnetostriktiver Positionssensor verwendet wird, welcher ein magnetisches Element (1, 10), ein magnetostriktives Element (3, 9), einen Detektor (7) und einen Impulsgenerator (7) umfasst, wobei das magnetische Element und das magnetostriktive Element zueinander in einem vorgegebenen Abstand angeordnet sind wobei,
• das magnetostriktive Element (3, 9) und das magnetische Element (1, 10) an zwei gegenüberliegenden Seiten eines flexiblen Hohlelementes (11) angeordnet werden, welches mit einem Gas und/oder einer Flüssigkeit gefüllt ist,
• vom Impulsgenerator (7) Stromimpulse durch das magnetostriktive Element (3, 9) geleitet werden,
• ein Signal erzeugt wird, wenn der Abstand zwischen den Elementen einen vorgegebenen Schwellwert unterschreitet,
• der vorgegebene Abstand zwischen den Elementen derart gewählt wird, dass er größer als der Schwellwert ist,
• durch Drücken auf eine Stelle an einem der Elemente, welches flexibel ausgeführt ist, der Abstand zwischen den Elementen derart verringert wird, dass der Schwellwert unterschritten wird,
• durch das erzeugte Signal über eine Laufzeitmessung vom Detektor ermittelt wird, an welcher Stelle der Druck ausgeübt worden ist, und
• durch ein Rückstellelement (2), nachdem ein Druck auf eines der Elemente ausgeübt worden ist, der vorgegebenen Abstand zwischen den Elementen wiederhergestellt wird.

## Claims

1. Magneto strictive position sensor which has a magnetic element (1, 10) and a magneto strictive element (3, 9), the magnetic element (1, 10) being at a predefined distance from the magneto strictive element (3, 9), wherein the magnetic element (1, 10) and/or the magneto strictive element (3, 9) are embodied in a flexible way such that when there is pressure at one point on one of the elements the distance between the elements at this point is reduced, and when the sensor comprises a resetting device (2) which, after a pressure has been applied to one of the elements, restores the predefined distance between the elements,
having a pulse generator (7) for generating current pulses which are conducted through the magneto strictive element (3, 9), and a detector (7) for receiving a signal and for measuring its transit time,
**characterized**
**in that** the magneto strictive element (3, 9) and the magnetic element (1, 10) are arranged at two opposite sides on a flexible hollow element (11) which is filled with a gas and/or a liquid.

2. Sensor according to Claim 1, **characterized in that** the magnetic element (1, 10) runs essentially parallel to the magneto strictive element (3, 9).

3. Sensor according to Claim 1 or 2, **characterized in that** the magnetic element (1, 10) has individual permanent magnets arranged in a row.

4. Sensor according to one of the preceding claims, **characterized in that** the magnetic element (1, 10) is embodied in a strip shape.

5. Sensor according to one of the preceding claims, **characterized in that** the magneto strictive element (3, 9) comprises a magneto strictive wire.

6. Sensor according to one of the preceding claims, **characterized in that** a layer composed of an elastic material (2) is located between the magneto strictive element (3, 9) and the magnetic element (1, 10).

7. Sensor according to one of the preceding claims, **characterized in that** a layer composed of a foam-like plastic (2) is located between the elements.

8. Sensor according to one of the preceding claims, **characterized in that** said sensor has a screen (4) which surrounds the magneto strictive element (3, 9) and the magnetic element (1, 10) and which performs magnetic screening.

9. Sensor according to Claim 8, **characterized in that** the screen (4) has a U-shaped profile.

10. Sensor according to one of the preceding claims, **characterized in that** said sensor is embodied in a circular shape.

11. Vehicle, in particular a combat vehicle or observation vehicle, having a position sensor according to one of the preceding claims as a high-speed orienting device.

12. Vehicle according to Claim 11, **characterized in that** the sensor is arranged around an observation point in the interior of the vehicle.

13. Vehicle according to Claim 12, **characterized in that** the sensor is arranged along the circumference of an observation hatch (5) of the vehicle.

14. Vehicle according to one of Claims 11 to 13, **characterized in that** the sensor is used as an angle encoder, in particular independently of the position in the space.

15. Vehicle according to one of Claims 11 to 13, **characterized in that** the sensor is used as a position encoder.

16. Method for determining positions, wherein a magneto strictive position sensor is used which comprises a magnetic element (1, 10), a magneto strictive element (3, 9), a detector (7) and a pulse generator (7), wherein the magnetic element and the magneto strictive element are arranged a predefined distance from one another, wherein
• the magneto strictive element (3, 9) and the magnetic element (1, 10) are arranged on opposite sides of a flexible hollow element (11) which is filled with a gas and/or a liquid,
• current pulses are conducted from the pulse generator (7) through the magneto strictive element (3, 9),
• a signal is generated if the distance between the elements undershoots a predefined threshold value,
• the predefined distance between the elements is selected in such a way that it is larger than the threshold value,
• by pressing on a point on one of the elements, which element is embodied in a flexible way, the distance between the elements is reduced in such a way that the threshold value is undershot,
• the point at which the pressure has been applied is determined by the detector using a transit time measurement by means of the signal which is generated, and
• after a pressure has been applied to one of the elements, the predefined distance between the elements is restored by means of a resetting element (2).

## Revendications

1. Capteur de position magnétostrictif, qui présente un élément magnétique (1, 10) et un élément magnétostrictif (3, 9), dans lequel l'élément magnétique (1, 10) présente une distance prédéfinie par rapport à l'élément magnétostrictif (3, 9), dans lequel l'élément magnétique (1, 10) et/ou l'élément magnétostrictif (3, 9) sont réalisés de manière flexible de telle manière que dans le cas d'une pression appliquée sur un endroit au niveau de l'un des éléments, la distance entre les éléments est réduite au niveau dudit endroit, et dans lequel le capteur comprend un dispositif de rappel (2), qui, après qu'une pression a été exercée sur l'un des éléments, rétablit la distance prédéfinie entre les éléments,
comprenant un générateur d'impulsions (7) pour générer des impulsions de courant acheminées à travers l'élément magnétostrictif (3, 9), et
un détecteur (7) pour recevoir un signal et pour mesurer le temps de propagation de ce dernier,
**caractérisé en ce que**
l'élément magnétostrictif (3, 9) et l'élément magnétique (1, 10) sont disposés au niveau de deux côtés se faisant face d'un élément creux (11) flexible, lequel est rempli d'un gaz et/ou d'un liquide.

2. Capteur selon la revendication 1, **caractérisé en ce que** l'élément magnétique (1, 10) s'étend sensiblement de manière parallèle par rapport à l'élément magnétostrictif (3, 9).

3. Capteur selon la revendication 1 ou 2, **caractérisé en ce que** l'élément magnétique (1, 10) présente divers aimants permanents alignés les uns contre les autres.

4. Capteur selon l'une quelconque des revendications précédentes, **caractérisé en ce que** l'élément magnétique (1, 10) est réalisé de manière à présenter une forme de bande.

5. Capteur selon l'une quelconque des revendications précédentes, **caractérisé en ce que** l'élément magnétostrictif (3, 9) comprend un fil métallique magnétostrictif.

6. Capteur selon l'une quelconque des revendications précédentes, **caractérisé en ce qu'**une couche composée d'un matériau (2) élastique se trouve entre l'élément magnétostrictif (3, 9) et l'élément magnétique (1, 10).

7. Capteur selon l'une quelconque des revendications précédentes, **caractérisé en ce qu'**une couche composée d'une matière synthétique (2) de type mousse se trouve entre les éléments.

8. Capteur selon l'une quelconque des revendications précédentes, **caractérisé en ce qu'**il présente un blindage (4), qui renferme l'élément magnétostrictif (3, 9) et l'élément magnétique (1, 10), et qui assure un blindage magnétique.

9. Capteur selon la revendication 8, **caractérisé en ce que** le blindage (4) présente un profil en forme de U.

10. Capteur selon l'une quelconque des revendications précédentes, **caractérisé en ce qu'**il est réalisé de manière à présenter une forme circulaire.

11. Véhicule, en particulier véhicule de guerre ou véhicule d'observation, comprenant un capteur de position selon l'une quelconque des revendications précédentes faisant office d'appareil de visée à haute vitesse.

12. Véhicule selon la revendication 11, **caractérisé en ce que** le capteur est disposé à l'intérieur du véhicule tout autour d'un emplacement d'observation.

13. Véhicule selon la revendication 12, **caractérisé en ce que** le capteur est disposé le long de la périphérie d'une lucarne d'observation (5) du véhicule.

14. Véhicule selon l'une quelconque des revendications 11 à 13, **caractérisé en ce que** le capteur est utilisé comme un transmetteur d'angle, en particulier indépendamment de la situation dans l'espace.

15. Véhicule selon l'une quelconque des revendications 11 à 13, **caractérisé en ce que** le capteur est utilisé comme un transmetteur de déplacement.

16. Procédé pour déterminer une position, dans lequel un capteur de position magnétostrictif est utilisé, lequel comprend un élément magnétique (1, 10), un élément magnétostrictif (3, 9), un détecteur (7) et un générateur d'impulsions (7), dans lequel l'élément magnétique et l'élément magnétostrictif sont disposés l'un par rapport à l'autre à une distance prédéfinie, dans lequel
- l'élément magnétostrictif (3, 9) et l'élément magnétique (1, 10) sont disposés au niveau de deux côtés se faisant face d'un élément creux (11) flexible, qui est rempli d'un gaz et/ou d'un liquide,
- des impulsions de courant sont acheminées à travers l'élément magnétostrictif (3, 9) par le générateur d'impulsions (7),
- un signal est produit, quand la distance entre les éléments présente une valeur inférieure à une valeur de seuil prédéfinie,
- la distance prédéfinie entre les éléments est choisie de telle manière qu'elle est plus grande que la valeur de seuil,
- la distance entre les éléments est réduite en appuyant sur un emplacement au niveau de l'un des éléments, qui est réalisé de manière flexible, de telle manière que la valeur de seuil est passe en dessous,
- est déterminé, par le signal produit, par l'intermédiaire d'une mesure de temps de propagation par le détecteur, l'emplacement, au niveau duquel la pression a été exercée, et
- la distance prédéfinie entre les éléments est rétablie par un élément de rappel (2) après qu'une pression a été exercée sur un des éléments.
